Europäisches Patentamt

European Patent Office

Office européen des brevets

(11) Veröffentlichungsnummer: **0 081 880**
A2

# (12) EUROPÄISCHE PATENTANMELDUNG

(21) Anmeldenummer: 82201553.3

(22) Anmeldetag: 07.12.82

(51) Int. Cl.³: **H 02 M 7/155**

(30) Priorität: **14.12.81 DE 3149447**

(43) Veröffentlichungstag der Anmeldung: **22.06.83**
**Patentblatt 83/25**

(84) Benannte Vertragsstaaten: **AT BE CH DE FR GB IT LI LU NL SE**

(71) Anmelder: **Braun Aktiengesellschaft, Rüsselsheimer Strasse 22, D-6000 Frankfurt/Main (DE)**

(72) Erfinder: **Bauer, Anton, Paradiesweg 19, D-6233 Kelkheim (DE)**

(74) Vertreter: **Einsele, Rolf, Braun Aktiengesellschaft Postfach 1120 Frankfurter Strasse 145, D-6242 Kronberg Taunus (DE)**

(54) Regelungsschaltung zum Konstanthalten der Betriebsspannung eines elektrischen Verbrauchers.

(57) Gegenstand der Erfindung ist eine Regelungsschaltung zum Konstanthalten der Betriebsspannung eines an unterschiedlichen Netzspannungen betreibbaren elektrischen Verbrauchers (1), der in Reihe zu einem phasenanschnittsteuerbaren elektronischen Schalter (2) geschaltet ist. Der am Verbraucher (1) anliegende Ist-Wert der Betriebsspannung wird mit einem von einem Referenzelement (4) abgegebenen Soll-Wert verglichen und einem Vergleichselement (3) zugeführt, das mit dem Steueranschluß des phasenanschnittsteuerbaren elektronischen Schalters (2) verbunden ist. Der am Verbraucher (1) anliegende Ist-Wert der Betriebsspannung kann wahlweise integriert oder aus der Differenz des Mittelwertes der Betriebsspannung und des Mittelwertes der an dem phasenanschnittsteuerbaren elektronischen Schalter (2) anliegenden Spannung gebildet werden. Das Hauptanwendungsgebiet der Erfindung liegt in elektrischen Haushalts- und Körperpflegegeräten.

Gegenstand der vorliegenden Erfindung ist eine Regelungsschaltung zum Konstanthalten der Betriebsspannung eines an unterschiedliche Netzspannungen betreibbaren elektrischen Verbrauchers mit einem in Reihe zum Verbraucher geschalteten phasenanschnittsteuerbaren elektronischen Schalter.

Es ist bekannt, elektrische Verbraucher, insbesondere Elektro-Kleingeräte, unter Verwendung der sogenannten Phasenanschnittsteuerung an unterschiedliche Netzspannungen im Bereich von beispielsweise 1oo bis 24o Volt Wechselspannung anzuschließen, ohne daß die elektrischen Verbraucher durch eine entsprechende Umschaltung auf die jeweilige Netzspannung eingestellt werden.

Phasenanschnittsteuerungen sind als solche auch zur Steuerung der Helligkeit von elektrischen Glühlampen bekannt, wobei über einen Einstellwinderstand eine Zeitkonstante oder eine Phasenbrücke zur zeitlichen Verschiebung der Zündspannung eines phasenanschnittsteuerbaren elektronischen Schalters verändert wird. Als phasenanschnittsteuerbare Schalter werden dabei im allgemeinen Transistoren, Thyristoren oder Triacs verwendet.

Aufgabe der vorliegenden Erfindung ist es, eine Regelungsschaltung zum Konstanthalten der Betriebsspannung eines an unterschiedliche Netzspannungen betreibbaren elektrischen Verbrauchers unter Verwendung eines phasenanschnittsteuerbaren elektronischen Schalters zu schaffen, mit der Fehlschaltungen, die zur Zerstörung des elektrischen Verbrauchers führen können, vermieden werden und ein zuverlässiger Überspannungsschutz des elektrischen Verbrauchers er-reicht wird.

Diese Aufgabe wird erfindungsgemäß dadurch gelöst, daß der am Verbraucher anliegende Ist-Wert der Spannung mit einem von einem Referenzelement abgegriffenen Soll-Wert verglichen und einem mit dem Steueranschluß des phasenanschnittsteuerbaren elektronischen Schalters verbundenen Vergleichselement zugeführt wird.

...

Die erfindungsgemäße Lösung ermöglicht einen Betrieb eines beliebigen Elektrogerätes an einer in weiten Grenzen variablen Betriebsspannung, ohne daß eine Spannungsumschaltung auf die jeweils vorhandene Betriebsspannung erforderlich ist, die somit das Risiko einer Fehlschaltung des Spannungswählers durch den Benutzer ausschaltet und zudem einen zuverlässigen Überspannungsschutz bei ansteigenden Betriebsspannungen gewährleistet.

Eine Variante der erfindungsgemäßen Lösung ist dadurch gekennzeichnet, daß der am Verbraucher anliegende Ist-Wert der Spannung im Vergleich mit dem am Referenzelement abgegriffenen Soll-Wert integriert wird, wozu parallel zum Verbraucher die Reihenschaltung eines Kondensators und eines ersten Widerstandes geschaltet ist, die die Verbindung des ersten Widerstandes mit dem Kondensator und mit dem Emitter eines als Vergleichselement dienenden Transistors verbunden ist, dessen Basis an die Anode einer als Referenzelement dienenden und in Reihe zu einem zweiten Widerstand parallel an der Verbraucherspannung liegenden Zenerdiode angeschlossen ist und der Kollektor des Transistors mit einem zweiten Kondensator verbunden ist, der parallel zur Steueranschluß-Kathodenstrecke eines in Reihe zum Verbraucher geschalteten und mit diesem anodenseitig verbundenen Thyristors geschaltet ist, wobei die Kathode des Thyristors mit dem negativen Anschluß der Netzspannung verbunden ist.

Diese sich durch besonders geringen Aufwand auszeichnende Schaltung ermöglicht einen guten Vergleich zwischen dem an dem Vergleichselement und dem Verbraucher anliegenden Spannungswert und ist für eine Vielzahl von Anwendungsfällen mit hoher Zuverlässigkeit anwendbar.

Weine weitere Variante der erfindungsgemäßen Lösung ist dadurch gekennzeichnet, daß der am Verbraucher anliegende Ist-Wert der Spannung aus der Differenz des Mittelwertes der Betriebsspannung und dem Mittelwert der an dem phasenanschnittsteuerbaren elektronischen Schalter anliegenden Spannung zusammengesetzt ist, wozu

...

der Emitter des als Vergleichselement dienenden Transistors sowohl über einen ersten Widerstand an die Verbindung des elektrischen Verbrauchers mit dem phasenanschnittsteuerbaren elektronishcen Schalter als auch an einen mit dem negativen Anschluß der Spannungsquelle verbundenen Kondensator angeschlossen ist, der Kollektor des Transistors mit dem Steueranschluß des elektronischen Schalters verbunden ist und die Basis des Transistors mit der Anode einer als Referenzelement dienenden Zenerdiode verbunden ist, deren Kathode sowohl über einen Widerstand mit dem positiven Pol der Spannungsquelle als auch über einen weiteren Kondensator mit dem negativen Pol der Spannungsquelle verbunden ist. Zusätzlich ist parallel zum ersten Widerstand die Reihenschaltung eines zweiten Widerstandes und einer kathodenseitig mit dem Verbraucher verbundenen Diode vorgesehen.

Diese äußerst zuverlässig arbeitende Schaltung ermöglicht auch bei großer Phasenanschnittsteuerung einen guten Vergleich zwischen der am Referenzelement anliegenden Spannung und der Spannung, mit der der Verbraucher beaufschlagt wird. Durch die Kombination der Erfassung des arithmetischen Mittelwertes und des Spitzenwertes der Spannung wird eine gute Annäherung an die echte Effektivwerterfassung der Betriebsspannung erreicht.

Weitere, vorteilhafte Ausgesteltungen der erfindungsgemäßen Lösung sind den kennzeichnenden Merkmalen der Patentansprüche 4 und 8 - 1o zu entnehmen.

Anhand eines in der Zeichnung dargestellten Ausführungsbeispieles soll der der Erfindung zugrunde liegende Gedanke näher erläutert werden. Es zeigen:

Fig. 1 ein Regelungsschaltbild zum Konstanthalten der Betriebsspannung eines elektrischen Verbrauchers mit Abgabe des arithmetischen Mittelwertes der Betriebsspannung als Vergleichsspannung und

...

0081880

Fig. 2  ein  Regelungsschaltbild zum Konstanthalten der Betriebsspannung eines elektrischen Verbrauchers mit einer Kombination der Erfassung des arithmetischen und des Spitzenwertes
der Betriebsspannung als Vergleichsspannung.

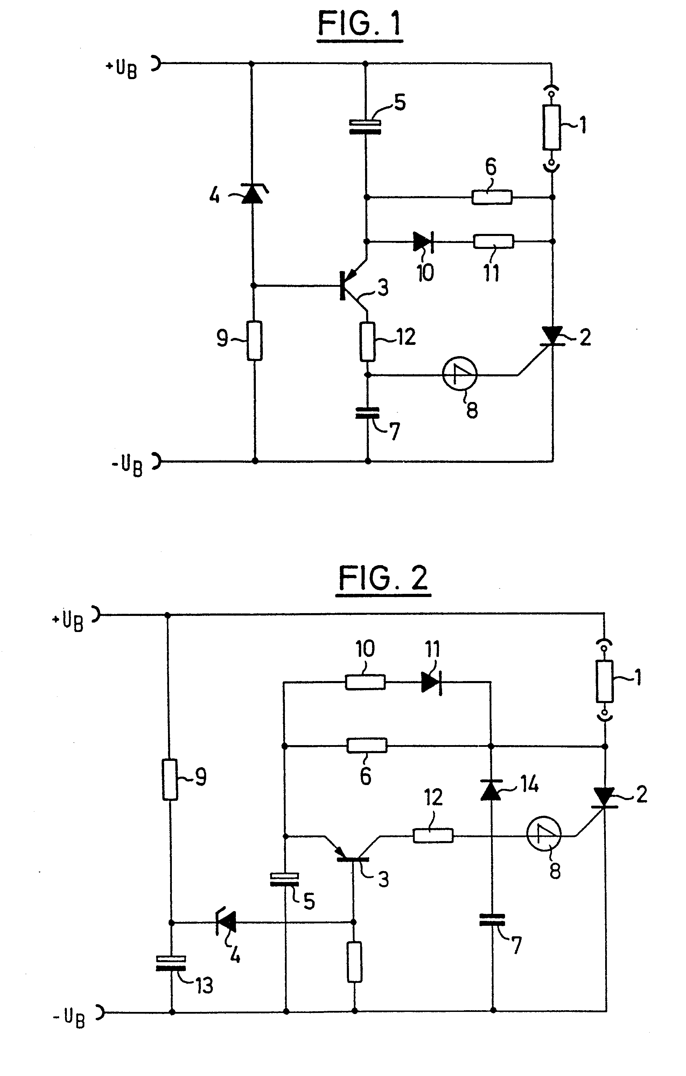

In Figur 1 ist in Reihe an eine beliebige Wechselspannungsquelle
$\pm U_B$ der Leistungsteil eines elektrischen Gerätes geschaltet, der
ersatzweise aus einem elektrischen Verbraucher 1 und in Reihe dazu
geschaltetem elektronischen Schalter 2 besteht. Die Netzspannung
$\pm U_B$ kann in üblicher Weise Werte zwischen loo bis 24o Volt annehmen,
wobei in vereinfachter Darstellung ein positiver und negativer Pol
der Spannungsquelle angenommen wurde, was in tatsächlich ausgeführten Geräten durch Vorschalten einer an ein Wechselstromnetz angeschlossenen Gleichrichterschaltung realisiert wird. Parallel zum
elektrischen Verbraucher 1 ist die Reihenschaltung eines Kondensators 5 und eines ersten Widerstandes 6 geschaltet. Die Verbindung
des ersten Widerstandes 6 mit dem Kondensator 5 ist mit dem Emitter
eines als Vergleichselement dienenden Transistors 3 verbunden, dessen
Basis an die Verbindung der Anode einer als Referenzelement dienenden
Zenerdiode 4 mit einem Widerstand 9 angeschlossen ist, die in Reihe
geschaltet parallel an die Netz-Wechselspannungsquelle $\pm U_B$ angeschlossen sind. Der Kollektor des als Vergleichselement dienenden
Transistors 3 ist über einen Widerstand 12 und einen weiteren Kondensator 7 an den negativen Pol der Spannungsquelle angeschlossen. An
die Verbindung dieses Widerstandes 12 mit dem weiteren Kondensator
7 einerseits und an den Steueranschluß des elektronischen Schalters
2 andererseits ist eine Trigger-Diode angeschlossen. Schließlich ist
noch parallel zum ersten Widerstand 6 die Reihenschaltung einer Diode
lo und eines zweiten Widerstandes 11 geschaltet, wobei die Anode der
Diode lo mit dem Emitter des als Vergleichselement dienenden
Transistors 3 verbunden ist.

In dieser Ausführungsform der erfindungsgemäßen Regelungsschaltung
wird der am elektrischen Verbraucher anliegende Ist-Wert der Spannung
zum Vergleich mit einem Spannungs-Soll-Wert herangezogen. Als Ver-

...

gleichselement dient in dieser Ausführungsform die Zenerdiode 4, die über den Widerstand 9 vom Minusanschluß der Regelungsschaltung von Strom durchflossen wird. Wird der Emitter des als Vergleichselement dienenden Transistors 3 durch die am elektrischen Verbraucher 1 anliegende Spannung über die mittels der Zenerdiode 4 abzüglich des Spannungsabfalles an der Basis-Emitter-Strecke des Transistors 3 konstantgehaltenen Basisspannung angehoben, so nimmt der Kollektorstrom des Transistors 3 ab. Als Folge davon wird die Ladezeitkonstante des Zündkondensators 7 in Reihe zum Widerstand 12 vergrößert und damit der Zündzeitpunkt des elektronischen Schalters 2 verzögert, wodurch ein weiterer Anstieg der Verbraucherspannung verhindert wird. Sinkt dagegen die Verbraucherspannung ab, so steigt infolge der konstantgehaltenen Basisspannung des Transistors 3 der Kollektorstrom an, der Zündkondensator 7 erhält über den Widerstand 12 einen größeren Ladestrom, so daß die am Verbindungspunkt des Widerstandes 12 mit dem Zündkondensator 7 anliegende und mit der Ladung des Zündkondensators 7 ansteigende Spannung die Durchbruchspannung der Trigger-Diode 8 früher erreicht und somit den elektronischen Schalter 2 zu einem früheren Zeitpunkt durchsteuert. Mit der früheren Durchsteuerung des elektronischen Schalters 2 wird eine größere Spannungszeitfläche an den Verbraucher und somit ein größerer Effektivwert der Betriebsspannung an den elektrischen Verbraucher 1 angelegt.

Da die Vergleichsschaltung im Regelbereich eine geglättete Spannung benötigt, ist die am Verbraucher 1 anliegende Spannung über einen Tiefpaß, der aus einem Widerstand 6 und einem Kondensator 5 besteht, gesiebt. Die Spannung an diesem Kondensator 5 stellt allerdings einen arithmetischen Mittelwert der Verbraucherspannung dar, während für die Verbraucherleistung selbst der quadratische Mittelwert bzw. Effektivwert der anliegenden Spannung maßgebend ist.

Nimmt man in bekannter Weise bei einer sinusförmigen Spannung oder einem sinusförmigen Strom den Spannungsspitzenwert bzw. Spitzenwert des Stromes mit 1 an, dann beträgt der arithmetische Mittelwert bei Vollweg-Gleichrichtung 0,637 oder $\frac{2}{\pi}$ und der Effektivwert 0,707 bzw.

...

$\frac{1}{\sqrt{2}}$ . Mit kürzer werdenen Flußzeiten pro Periode steigt jeodoch die Differenz zwischen dem arithmetischen und dem quadratischen Mittelwert bzw. Effektivwert an. Wenn bei einer an der Obergrenze liegenden Netzspannung infolge der Regelung nur noch ein kleiner Teil der Halbwellen eingeschaltet wird, so kann der Effektivwert den arithmetischen Mittelwert um den Faktor 2 bis 2,5 überschreiten. Eine auf eine gleichbleibende Spannung am Siebkondensator 5 ausgerichtete Regelung würde daher bei einer hohen Netzspannung einen zu hohen Effektivwert der Gerätespannung bzw. einen zu hohen Est-Wert der Spannung vortäuschen.

Um diese obengenannte Fehlerquelle auszuschalten, ist es an sich bekannt, Thermoumformer o.dgl. zu verwenden, was jedoch im allgemeinen wegen des nicht mehr vertretbaren Aufwandes bei Konsumgeräten oder Massagegeräten der Elektroindustrie im allgemeinen wirtschaftlich nicht mehr vertretbar ist.

Eine gute Annäherung an die echte Effektivwertmessung bietet eine Kombination der Erfassung des arithmetischen Mittelwertes und des Spitzenwertes. Der Spitzenwert steigt gegenüber dem arithmetischen Mittelwert mit länger werdender Ausschaltdauer stärker als der Effektivwert an. Zu diesem Zweck ist in der Schaltung gemäß Fig. 1 parallel zu dem ersten Widerstand 6 die Reihenschaltung einer Diode 1o mit einem zweiten Reihenwiderstand 11 vorgesehen. Mit Hilfe dieser Reihenschaltung parallel zum Widerstand 6 läßt sich diese Überhöhung des Spitzenwertes auch soweit reduzieren, daß sich über den gesamten Regelbereich nur eine geringe Abweichung der am Kondensator 5 anliegenden Spannung gegenüber dem Effektivwert der Spannung am elektrischen Verbraucher 1 ergibt. Sofern bei dem Verbraucher eine induktive Komponente gegeben ist und somit der Scheinwiderstand mit zunahmender Ausschaltzeit größer wird, ist die Erfassung des Spitzenwertes durch den Reihenwiderstand 11 entsprechend abzuschwächen. Bei einem großen induktiven Anteil kann die Erfassung des arithmetischen Mittelwertes alleine vollauf genügen.

...

Da die an der Zenerdiode 4 und am Kondensator 5 abgegriffenen vergleichsspannungen auf den positiven Pol der Spannungsquelle $+U_B$ gezogen werden, besteht die Möglichkeit, daß diese Spannungen im Bereich der Nullstellen der Betriebsspannung negativ gegenüber dem negativen Pol der Spannungsquelle werden. Bei einer Steuerung des elektronischen Schalters 2 über einen großen Phasenwinkel hinaus wird dann der Ladestrom für den Zündkondensator 7 unterbrochen und die Zündung setzt in diesem Falle für eine oder mehrere Halbwellen aus. Um diese mögliche Fehlerquelle auszuschalten, ist eine Variante der erfindungsgemäßen Lösung entsprechend der Darstellung gemäß Fig. 2 ausgeführt.

In der Schaltungsanordnung gemäß Fig. 2 ist ebenfalls eine Reihenschaltung eines elektrischen Verbrauchers 1 mit einem elektronischen Schalter 2 parallel an eine speisende Wechselspannungsquelle $\pm U_B$ angeschlossen. In dieser Anordnung ist der Emitter des als Vergleichselement dienenden Transistors 3 sowohl über einen ersten Widerstand 6 an die Verbindung des elektrischen Verbrauchers 1 mit dem phasenanschnittsteuerbaren elektronischen Schalter 2 als auch an einen mit dem negativen Anschluß der Spannungsquelle $-U_B$ verbunden Kondensator 5 angeschlossen. Der Kollektor des Transistors 3 ist mit dem Steueranschluß des elektronischen Schalters verbunden, während die Basis des Transistors 3 mit der Anode einer als Referenzelement dienenden Zenerdiode verbunden ist. Die Kathode der Zenerdiode 4 ist sowohl über einen Widerstand 9 mit dem positiven Pol der Spannungsquelle $+U_B$ als auch über einen weiteren Kondensator 13 mit dem negativen Pol der Spannungsquelle $-U_B$ verbunden.

Parallel zur Steueranschluß-Anoden-Strecke des phasenanschnittsteuerbaren elektronischen Schalters 2 ist die Reihenschaltung einer zweiten Diode 14 mit kathodenseitigem Anschluß an die Anode des Thyristors und einer Trigger-Diode 8 geschaltet. Auch in dieser Anordnung ist parallel zur Steueranschluß-Kathoden-Strecke des als phasenanschnittsteuerbarer elektronischer Schalter dienenden

...

0081880

Thyristors 2 ein Zündkondensator 7 geschaltet. Darüber hinaus besteht auch hier die Möglichkeit, parallel zum ersten Widerstand 6 die Reihenschaltung eines weiteren Widerstandes lo mit einer Diode 11 zu schalten, deren Kathode an die Verbindung des elektrischen Verbrauchers 1 mit der Anode des Thyristors 2 angeschlossen ist.

Mit dieser Schaltung wird wirksam vermieden, daß bei einer Sperrung des Thyristors 2 über einen größeren Phasenwinkel hinaus der Ladestrom für den Zündkondensator 7 unterbrochen und damit die Zündung für eine oder mehrere Halbwellen ausgesetzt wird. Zu diesem Zweck wird sowohl aus der Betriebsspannung als auch aus der an der Anode des Thyristors 2 anliegenden Spannung an den Kondensatoren 5 und 13 ein Mittelwert gegenüber dem Minusanschluß der Betriebsspannung $\pm U_B$ gebildet, wobei die Differenz dieser Spannungswerte dem Ist-Wert der Spannung am elektrischen Verbraucher 1 entspricht. Die anodenseitig mit dem Zündkondensator 7 und kathodenseitig mit der Anode des Thyristors 2 verbundene Diode 14 ist dabei so gepolt, daß sie bei gesperrtem Thyristor 2 ebenfalls sperrt und bei durchgeschaltetem Thyristor 2 eine erneute Ladung des Zündkondensators 7 verhindert, die nach dem Löschen der Trigger-Diode 8 erneut einsetzen könnte. Dadurch ergeben sich besser definierte Ladezeiten und somit ein gleichmäßigerer Zündeinsatz.

Ausgehend von den oben dargestellten Ausführungsbeispielen sind noch weitere Varianten zur Bildung der am Vergleichselement anliegenden Ist-Werte und Soll-Werte der Betriebsspannung möglich. Soweit diese Varianten im Rahmen des Beanspruchten und für den Durchschnittsfachmann aus den oben dargestellten Ausführungsbeispielen ohne weiteres herleitbar sind, liegen sie auch im Rahmen dieser Erfindung.

Patentansprüche

1. Regelungsschaltung zum Konstanthalten der Betriebsspannung
eines an unterschiedlichen Netzspannungen betreibbaren
elektrischen Verbrauchers und eines in Reige zum Verbraucher
geschalteten phasenanschnittsteuerbaren elektronischen
Schalters, dadurch gekennzeichnet, daß der am Verbraucher (1)
anliegende Ist-Wert der Spannung mit einem von einem Referenzelement (4) abgegriffenen Sollwert verglichen und einem mit
dem Steueranschluß des phasenanschnittsteuerbaren elektronischen Schalters (2) verbundenen Vergleichselement (3) zugeführt wird.

2. Regelungsschaltung nach Anspruch 1, dadurch gekennzeichnet,
daß der am Verbraucher (1) anliegende Ist-Wert der Spannung im
Vergleich mit dem am Referenzelement (4) abgegriffenen Soll-
Wert integriert wird.

3. Regelungsschaltung nach Anspruch 1, dadurch gekennzeichnet,
daß der am Verbraucher (1) anliegende Ist-Wert der Spannung
aus der Differenz des Mittelwertes der Betriebsspannung und
des Mittelwertes der an dem phasenanschnittsteuerbaren
elektronischen Schalter (2) anliegenden Spannung zusammengesetzt ist.

4. Regelungsschaltung nach Anspruch 2, dadurch gekennzeichnet,
daß parallel zum Verbraucher (1) die Reihenschaltung eines
Kondensators (5) und eines ersten Widerstandes (6) geschaltet
ist, daß die Verbindung des ersten Widerstandes (6) mit dem
Kondensator (5) mit dem Emitter eines als Vergleichselement
dienenden Transistors (3) verbunden ist, dessen Basis an die
Anode einer als Referenzelement dienenden und in Reihe zu
einem zweiten Widerstand (9) parallel an der Verbraucherspannung ($\pm U_b$) liegenden Zenerdiode (4) angeschlossen ist und
daß der Kollektor des Transistors (3) mit einem zweiten Kondensator (7) verbunden ist, der parallel zur Steueranschluß-

...

Kathodenstrecke eines in Reihe zum Verbraucher (1) geschalteten und mit diesem anodenseitig verbundenen Thyristors (2) geschaltet ist, wobei die Kathode des Thyristors (2) mit dem negativen Anschluß (- $U_b$) der Netzspannung verbunden ist.

5. Regelungsschaltung nach Anspruch 4, dadurch gekennzeichnet, daß parallel zu dem ersten Widerstand (6) die Reihenschaltung einer Diode (lo) und eines zweiten Widerstandes (11) geschaltet ist, wobei die Anode der Diode (lo) mit dem Emitter des als Vergleichselement dienenden Transistors (3) verbunden ist.

6. Regelungsschaltung nach Anspruch 3, dadurch gekennzeichnet, daß der Emitter des als Vergleichselement dienenden Transistors (3) sowohl über einen ersten Widerstand (6) an die Verbindung des elektrischen Verbrauchers (1) mit dem phasenanschnittsteuerbaren elektronischen Schalter (2) als auch an einen mit dem negativen Anschluß der Spannungsquelle (- $U_B$) verbundenen Kondensator (5) angeschlossen ist, daß der Kollektor des Transistors (3) mit dem Steueranschluß des elektronischen Schalters (2) verbunden ist und daß die Basis des Transistors (3) mit der Anode einer als Referenzelement dienenden Zenerdiode (4) verbunden ist, deren Kathode sowohl über einen Widerstand (9) mit dem positiven Pol der Spannungsquelle (+ $U_B$) als auch über einen weiteren Kondensator (13) mit dem negativen Pol der Spannungsquelle (- $U_B$) verbunden ist.

7. Regelungsschaltung nach Anspruch 6, dadurch gekennzeichnet, daß parallel zum ersten Widerstand (6) die Reihenschaltung eines zweiten Widerstandes (lo) und einer Kathodenseitig mit dem Verbraucher (1) verbundenen Diode (11) geschaltet ist.

8. Regelungsschaltung nach den Ansprüchen 6 und 7, dadurch gekennzeichnet, daß der phasenanschnittsteuerbare elektronische Schalter (2) aus einem Thyristor besteht, dessen Steueran-

...

schluß-Anoden-Strecke eine zweite Diode (14) mit kathodenseitigem Anschluß an die Anode des Thyristors (2) parallel geschaltet ist.

9. Regelungsschaltung nach einem der vorangegangenen Ansprüche,
dadurch gekennzeichnet, daß an die Verbindung des Kollektors
des als Vergleichselement dienenden Transistors (3) mit dem
Steueranschluß des Thyristors (2) einerseits und an die
Kathode des Thyristors (2) bzw. dem negativen Pol der
Spannungsquelle (- $U_B$) andererseits ein Zündkondensator (7)
für den Thyristor (2) angeschlossen ist.

lo. Regelungsschaltung nach einem der vorangegangenen Ansprüche,
dadurch gekennzeichnet, daß an den Steueranschluß des
Thyristors (2) eine Trigger-Diode (8) angeschlossen ist.

FIG. 1

FIG. 2